# EUROPEAN PATENT SPECIFICATION

(11) **EP 2 931 826 B1**
(45) Date of publication and mention of the grant of the patent: **15.02.2017**
(21) Application number: 13802633.1
(22) Date of filing: 10.12.2013
(51) Int. Cl.: C09J 5/06, C09J 123/08, B27N 7/00, F16B 12/04, B29C 65/00, C09J 11/04, C08L 91/06, C08K 7/28, C08K 3/40

(54) **HOT MELT ADHESIVE COMPOSITION FOR PANEL BORDERING**
SCHMELZHAFTKLEBERZUSAMMENSETZUNG FÜR PLATTENUMRANDUNG
COMPOSITION ADHÉSIVE THERMOFUSIBLE POUR PANNEAUX ADJACENTS

(30) Priority: 13.12.2012 IT MI20122122
(43) Date of publication of application: 21.10.2015
(73) Proprietor: Essetre S.r.l., 20861 Brugherio (MB) (IT)
(72) Inventor: SEVESO, Enrico Luigi, I-20861 Brugherio (MB) (IT)
(74) Representative: Mittler, Enrico
(86) International application number: PCT/EP2013/076051
(87) International publication number: WO 2014/090785

(56) References cited:
- EP-A1- 0 547 797
- WO-A1-2006/065408
- WO-A1-2007/054112
- DE-A1-102010 041 521
- US-A- 5 454 909
- US-A1- 2004 014 866
- US-B1- 6 765 054
- PARK Y-J ET AL: "Adhesion and rheological properties of EVA-based hot-melt adhesives", INTERNATIONAL JOURNAL OF ADHESION AND ADHESIVES, ELSEVIER, AMSTERDAM, NL, vol. 26, no. 8, 1 December 2006 (2006-12-01), pages 571-576, XP027951603, ISSN: 0143-7496 [retrieved on 2006-12-01]

## Description

### Field of the invention

The present invention relates to a hot melt adhesive composition. In particular, the present invention relates to a hot melt adhesive composition comprising at least one hot melt adhesive for panel bordering.

### State of the art.

Hot melt adhesives are generally polymeric adhesives having the characteristic of easily melting due to the heat in order to be processed and to solidify after cooling. The hot melt adhesives used in the industry can be in the form of blocks, bars, granules, powder and film when they are at room temperature. A characteristic of the hot melt adhesives is the very rapid increase of the internal force during the cooling phase (rapid setting time).

The market for hot melt adhesives, also known as "hot melt", is very wide and fulfills the requirements of various industrial sectors: wood and wood products, paper, paper industry, electronics, shipbuilding and many more.

Known hot melt adhesives of the "hot melt" type are for example adhesives based on ethylene-vinyl acetate (EVA), polyolefins, polyamides, polyurethanes, based on styrene copolymers, polycaprolactones, fluoro polymers, and other similar compounds.

For example, the U.S. patent application published with No. U.S. 2002/164486 describes a reactive self-supporting "hot-melt" adhesive type which includes the combination of an isocyanate and an isocyanate-reactive polymer or resin, while the international application published as WO 2001-014714 A2 describes another adhesive of the "hot-melt" type which includes a particular polyolefin copolymer and a polyethylene wax of the maleata type.

Furthermore, U.S. Patent 5,454,909 discloses a low density adhesive composition of the "hot melt" type comprising fillers of the hollow glass microspheres type combined with at least one hot melt adhesive, such as for example an ethylene-vinyl acetate (EVA) copolymer.

The international patent application published as WO 2006/065408 discloses a "hot melt" adhesive type for carpets that includes glass powder as a filler and an ethylene-vinyl acetate polymer having a vinyl acetate content from 12 to 20 %.

DE 10 2010 041 521 A1 describes a hot melt adhesive composition for panel bordering which can be processed so as to form an aesthetic and water resistant glue line.

It is known a bonding technique that utilizes the co-extrusion of edges in acrylonitrile-butadiene-styrene (ABS) and other plastics with an adhesive film (solid). This process comprises the overheating by a laser system which thermally recovers the glue that at the molten state allows the edge to be anchored to a chipboard and/or MDF (medium density fiber) panel.

The traditional process of panel bordering consists in the fact that the panel, for example realized in raw chipboard, is initially finished by applying onto the two surfaces a decorative paper, a plastic laminate, etc. Once this step is completed, the panel is trimmed by a machine called squaring machine and immediately after edged by a flanging machine which hot spreads a hot melt adhesive by a glue spreader roller that has the purpose of letting an edge adhering to closure the four sides of the panel itself.

Unfortunately, if the adhesive is not of the same color of the panel edge and plane, an adhesion joint (glue line) between edge and panel is highlighted. The thickness given by the density of these products loaded and colored determines a glue line also visible to the naked eye, clearly compromising the aesthetics. The problem is that there exist an infinite number of edges and colors and that, once a pigmented hot melt adhesive of a certain color has been used in the tank of the flanging machine, it becomes almost impossible to continuously work with other hot melt adhesives of different colors, since this would require the tank cleaning for a period of at least 12 hours or its replacement with another clean one. Dismantling and recovery of the aforementioned tanks would impact on both labor charges and significant downtime. Consequently, to avoid this task, hot melt adhesives defined as "having natural color" are being used, wherein this term means a white/yellowish dirty tint, which is the effect of the resins extracted from rosin and from macromolecular fillers (also called "fillers"), such as for example, calcium carbonate (CaCO₃), barium sulfate (BaSO₄), calcium sulfate (CaSO₄) and the like. Such fillers improve some polymer mechanical properties, such as the cohesive strength, wear resistance and strain resistance. However, for economically reasons, such products are more and more added with fillers that produce modest and more and more scarce adhesion.

The Applicant has thus noticed the importance of spreading a minimal adhesive mass able to reduce the adhesive film thickness, leading to clear benefits in terms of aesthetics.

Purpose of the present invention is to provide a hot melt adhesive composition having a limited mass and a final transparent aspect, so as to reduce the annoying and unsightly visibility of the glue line evident after bonding.

Further object of the present invention is to provide a hot melt adhesive composition having high specific adhesion, excellent water resistance, and high thermal resistance in terms of "softening point", i.e. the temperature at which the material softens.

Still a further object of the present invention is to provide an energetically convenient adhesive composition, enabling easy cleaning of the machinery, and being not toxic.

### Summary of the invention

Therefore, in a first aspect the present invention relates to a hot melt adhesive composition such as that one indicated in claim 1.

The Applicant of the present application has in fact surprisingly found that a hot melt adhesive composition comprising at least one hot-melt adhesive and glass particles, wherein said composition comprises a first hot melt adhesive selected from the G1 group, comprising ethylene-vinyl acetate (EVA) copolymers having a vinyl acetate content from 20 to 35% and a melt index between 4.0 and 15.0 g/10 minutes, and a second hot melt adhesive selected from the G2 group comprising ethylene-vinyl acetate (EVA) copolymers having a vinyl acetate content from 20 to 35 % and a melt index greater than 15.0 g/10 minutes, is capable of producing an adhesive film that, once melted and delivered onto a panel, is almost transparent, reducing to the minimum the contrast which is determined between the panel surface and the edge applied thereon.

In addition, the hot melt adhesive composition of the present invention is able to provide excellent adhesion and high water resistance.

In the present description and the appended claims, the term "melt index" means the fluidity index of a molten polymer, whose measurement is made by known in the art techniques. A typical measurement example of a polymer melt index is described in ASTM D1238 and ISO1133 standards and is performed by loading the molten polymer at a given temperature (usually 190 °C) in a heated cylinder to which is fixed a small cylinder (having generally diameter of about 2.095 mm and length of about 8 mm), which exerts a constant force and let the polymer flowing through a capillary tube. The weight (expressed in grams) of the polymer spilled in 10 minutes corresponds to the melt index value: the greater the weight of the spilled material, the greater the melt index and the lower the polymer viscosity. The operating temperature and the small cylinder weight are fixed by standards according to the type of material to be tested.

In the safety data sheets of each polymer known in the market the relative melt index, also referred to by the English term "melt index" or its abbreviation MI, is reported, calculated according to the parameters specified in the mentioned above standards.

Preferably, said glass particles have a melting point in the range between about 1,100 °C and 1,300 °C, more preferably between about 1,140 °C and 1,260 °C. Preferably, said glass particles have a bulk density between about 50 kg/m³ and about 200 kg/m³, more preferably between about 100 kg/m³ and about 150 kg/m³. Preferably, said glass particles are in the form of granulated material; preferably, said glass particles have spherical shape; more preferably, said glass particles have hollow spherical shape. Preferably, said glass particles have a diameter between about 100 microns and about 200 microns, more preferably between about 120 microns and about 160 microns. Preferably, said glass particles have spherical shape and are chemically treated, for example with silica.

Preferably, the hot melt adhesive composition of the present invention comprises said glass particles in weight percentage from 3 to 20 %, more preferably from 5 to 15%, compared to the total weight of the hot melt adhesive composition.

Preferably, said first hot melt adhesive selected from the G1 group, comprising ethylene-vinyl acetate (EVA) copolymers having a vinyl acetate content from 20 to 35% and a melt index between 4.0 and 15.0 g/10 minutes, is the Elvax^{R} 260 copolymer, available from E.I. du Pont de Nemours and Company, Wilmington U.S.A.

Furthermore, preferably, said second hot melt adhesive selected from the G2 group comprising ethylene-vinyl acetate (EVA) copolymers having a vinyl acetate content from 20 to 35% and a melt index greater than 15.0 g/10 minutes is the Elvax^{R} 250 copolymer, also available from E.I. du Pont de Nemours and Company, Wilmington U.S.A.

Preferably, the hot melt adhesive composition of the present invention comprises a first hot melt adhesive selected from said G1 group and having a vinyl acetate content from 25 to 30%, and a second hot melt adhesive selected from said G2 group and having a vinyl acetate content from 25 to 30%.

Preferably, the hot melt adhesive composition of the present invention comprises a first hot melt adhesive selected from the G1 group, comprising ethylene-vinyl acetate (EVA) copolymers having a vinyl acetate content from 20 to 35% and a melt index between 4.0 and 15.0 g/10 minutes, such as for example the Elvax^{R} 260 copolymer, a second hot melt adhesive selected from the G2 group comprising ethylene-vinyl acetate (EVA) copolymers having a vinyl acetate content from 20 to 35% and a melt index between 15.0 and 35.0 g/10 minutes, such as for example the Elvax^{R} 250 copolymer, and a third hot melt adhesive selected from the G3 group comprising ethylene-vinyl acetate (EVA) copolymers having a vinyl acetate content from 20 to 35% and a melt index greater than 35.0 g/10 minutes, such as for example the Elvax^{R} 220 copolymer, available from E.I. du Pont de Nemours and Company, Wilmington U.S.A.

More preferably, the hot melt adhesive composition of the present invention comprises said first hot melt adhesive selected from the G1 group in weight percentage from 3 to 15%, preferably from 5 to 10% by weight, relative to the total weight of the composition, said second hot melt adhesive selected from the G2 group in weight percentage from 30 to 70%, preferably from 40 to 60% by weight, relative to the total weight of the composition and said third hot melt adhesive selected from the G3 group in weight percentage from 0 to 30 %, preferably from 5 to 20 % by weight, relative to the total weight of the composition.

The copolymer composition influences its properties, a higher ethylene content promotes the adhesion to non-polar substrates, such as for example polyethylene, while increased content of vinyl acetate promotes the adhesion to polar substrates, such as for example paper. A higher ethylene content also increases the mechanical strength, block resistance, and the paraffin solubility. A higher vinyl acetate content provides greater flexibility, adhesion, hot tack, and a better performance at low temperature.

Preferably, the hot melt adhesive composition of the present invention further comprises at least a viscous agent, such as a resin. Examples of useful resin for the purposes of the present invention are rosins and their derivatives, terpenes and modified terpenes, aliphatic resins, cyclo-aliphatic resins, aliphatic hydrocarbon resins derived from petroleum, resins resulting from the polymerization of monomers primarily consisting of olefins and diolefins, hydrogenated resins of aliphatic hydrocarbons derived from petroleum, resins of aromatic hydrocarbons derived from petroleum, and mixed resins of aromatic and aliphatic hydrocarbons and their hydrogenated derivatives, resins of alicyclic hydrocarbon derived from oil and hydrogenated derivatives thereof, and combinations thereof.

Preferred viscous agents are resins of synthetic hydrocarbon derived from petroleum. Non-limiting examples include resins derived from aliphatic olefins, such as those available from Goodyear under the trade name Wingtack and the series Escorez^{(R)} 1300 from Exxon. A common resin in this class is a diene-olefin copolymer of piperylene and 2-methyl-2-butene, having a softening point of about 95 °C, as described in U.S. Patent No. 3,577,398 with reference to ASTM E 28-58T standard, where the softening point is defined as the temperature at which a sample disk contained within a horizontal ring is forced downward at a distance of 25.4 mm (1 inch) under the weight of a steel ball as the sample is heated at 5 °C/min in a bath of water, glycerin, silicone oil, ethylene glycol/water or glycerin/water. Particularly preferred are hydrogenated hydrocarbon resins. These hydrogenated resins include hydrogenated C9 resins such as Arkon® P70, P90, PL 15, P 125, M100 provided by Arakawa Chemical. Preferably said viscous agent is a resin of the hydrocarbon type; still more preferably is a resin of the aromatic hydrocarbon type.

Preferably, said viscous agent is a resin having a softening point between about 70 °C and about 135 °C, more preferably between 85 °C and 120 °C.

Preferably, the hot melt adhesive composition of the present invention comprises said viscous agent in a weight percentage from 20 to 40%, more preferably from 25 to 35% by weight with respect to the total weight of the composition.

By this way the adhesiveness of the hot melt adhesive composition of the present invention is further improved.

Preferably, the hot melt adhesive composition of the present invention further comprises at least one wax. Waxes useful for the purposes of the present invention are, for example, natural waxes, synthetic waxes, paraffin waxes, polyethylene waxes, microcrystalline waxes and waxes obtained by the Fischer-Tropsch method.

Preferably, said wax is a synthetic wax, more preferably a synthetic wax formed from saturated hydrocarbons.

Preferably, the hot melt adhesive composition of the present invention comprises said wax in a weight percentage from about 1 to about 10%, more preferably from about 3 to about 8% by weight relative to the total weight of the composition.

Preferably, the hot melt adhesive composition of the present invention is substantially free of fillers or macromolecular fillers ("fillers"), wherein "substantially free of fillers or macromolecular fillers" means a hot melt adhesive composition totally free of fillers or macromolecular fillers or containing a minimum amount of such fillers, such as for example less than about 0.5% by weight with respect to the total weight of the composition.

By this way, the composition of the present invention being free of such fillers, once it reaches the ideal temperature, assumes a smoothness such as to involve the entire viscous mass. The ability to drag the glue composition through a glue spreader roller present in the tank of the flanging machine, allows for a constant exchange of the molten product in the tank (wherein the roller is located). In such a way it is avoided that the glue, not remaining for a long time in a "static phase" in contact with the tank itself, does not undergo oxidation. Advantageously a lower oxidation, a minor color change of the adhesive and no fouling occurs, thus allowing the drastic reduction of the maintenance programs of the machinery, ensuring substantial time and money saving.

Preferably, the hot melt adhesive composition of the present invention may further comprises other ingredients useful in the field of "hot melt" adhesives, such as antioxidants, stabilizers, pigments, flow modifiers, dyes, which may be incorporated in less or greater amounts in the adhesive composition depending on the purpose.

Among the useful stabilizers or antioxidants are for example those of the phenol type described in the international patent application published with No. WO 2011/014.714 -A2.

These and other features of the present invention will be made more apparent from the following detailed description of a practical embodiment thereof, illustrated by a non-limiting way.

A production plant of the hot-melt adhesive composition according to the present invention included a hot extruder housing two co-rotating screws designed to move a mixture. In a first hopper within the extruder, heated at about 120 °C - 200 °C, 7 kg in granules of DuPont Elvax^{R} 260, an ethylene vinyl acetate (EVA) having a vinyl acetate content of 28% and a melt index of 5.7 g/10 minutes were added. In a second hopper within the extruder, heated at about 120 °C - 200 °C, 50 kg in granules of DuPont Elvax^{R} 250, an ethylene vinyl acetate having a vinyl acetate content of 28% and a melt index of 25 g/10 minutes, more fluid of the EVA inserted into the first hopper, were added. In a third hopper within the extruder, heated at about 100 °C, 30 kg of hydrogenated hydrocarbon resin called Arkon M-100, available from Arakawa Europe, having a softening point of 100 °C, calculated according to the method described in the ASTM E 28-58T standard, were added. In a fourth hopper within the extruder, heated at about 140 °C, 8 kg of glass spheres of the Eurocell® type produced by Europerl GmbH, Austria, having a melting point around 1,200 °C, a mean diameter of 140 microns, and an average bulk density of about 120 Kg/m³ were added. In a fifth hopper within the extruder, heated at about 100 °C, 5 kg of hard synthetic wax of the Sasolwax H1 type, available from Spica srl, Italy, in flakes or loaves form, based on saturated hydrocarbons with a carbon atoms average number of about 50, molecular weight equal to 785 and a flash point around 243 °C, were added.

The mixture consisting in the components of the above described five hoppers was free of high density fillers, commonly employed in conventional hot melt adhesives, such as for example CaCO₃, BaSO₄ or CaSO₄.

The co-rotating screws were rotated at such a speed to obtain about 350 kg of product per hour. The extruder was about 3 meters long. A bead came out from the extruder heated at about 120 °C and then entered in a water containing rotor with blades ("Gala system") adapted to obtain a hot-melt adhesive composition of the present invention in form of granules. Such wet granules were then dried in a dryer to obtain the C1 hot melt adhesive composition in granules according to the present invention ready for packaging and subsequent forwarding.

### Example 1 (invention)

### Transparency.

The hot melt adhesive composition C1 according to the present invention thus obtained was melted and delivered on the side of a panel P1, resulting to be completely transparent. Consequently, due to its transparency, the visual contrast that is usually determined between the surface of the panel P1 and the edge that is applied to it was eliminated, due to the fact that the two materials do not belong to the same solid. This result is thus a considerable improvement in the finishing levels during the painting step.

Some tests for verifying the characteristics of the hot-melt adhesive composition C1 applied to the panel P1 were then performed.

### Heat resistance test.

The panel P1 on whose edge the composition C1 was delivered was subjected to the edge heat resistance test performed according to UNI 9242:1987 + A1:1998 standards, at the CATAS SpA research and development center, wood and furniture sector. During such a test, the panel P1 was subjected in succession to the different temperatures of 40 °C, 50 °C, 60 °C, 70 °C, 80 °C and 90 °C. In correspondence of any of these temperatures visible alterations related to edge delaminations of the panel P1 occurred, achieving a rating of 5 on a scale ranging from a minimum of 1 to a maximum of 5.

### Water resistance test.

The panel P1 on whose edge the composition C1 of the present invention was delivered was subjected to the edge water resistance test performed according to UNI 10460:1996 standard, at said CATAS SpA. During such a test, the panel P1 and the edge applied to it were subjected in succession to different test times of 15, 30, 60, 120 and 240 minutes. In correspondence of any of these times visible detachments of the edge from the panel P1 occurred. In correspondence of the various times tested, the panel swelling was lower than or equal to 0.2 mm, achieving a rating of 5 on a scale ranging from a minimum of 1 to a maximum of 5.

### Example 2 (invention)

A hot melt adhesive composition C2 of the invention was prepared, differing from the above described composition C1 of the invention for the fact that instead of 50 Kg in granules of DuPont Elvax^{R} 250, 40 Kg in granules of such DuPont Elvax^{R} 250 and 10 Kg in granules of DuPont Elvax^{R} 220, an ethylene vinyl acetate having a vinyl acetate content of 28% and a melt index of 150 g/10 minutes were used, placed in a sixth hopper within the extruder.

The hot melt adhesive composition C2 of the invention thus obtained was subjected to the same evaluations as described above with reference to the composition C1 of the present invention, obtaining similar results, in particular obtaining again a good transparency and a rating of 5 on a scale ranging from a minimum of 1 to a maximum of 5, in the various heat and water resistance tests.

### Example 3 (comparison)

A typical reference adhesive composition C3, which differed from the composition C1 of the present invention described above for the fact of being free of glass particles, was melted and delivered on the side of a panel P2, similar to the panel P1.

### Water resistance test.

The panel P2 on whose edge the reference composition C3 was supplied was subjected to the edge water resistance test performed according to the same UNI 10460:1996 standard described above in Example 1. In such a test, the panel P2 and the edge to it applied were subjected in succession to different test times of 15, 30, 60, 120 and 240 minutes. In correspondence of the times of 15, 30, 60, neither edge detachments from the panel P2, nor swelling of the panel P2 itself occurred. However, already in correspondence of 120 minutes only, a swelling of 0.4 mm occurred in the panel P2, accentuated in correspondence with the test at 240 minutes obtaining a rating of 3, in a scale ranging from a minimum of 1 to a maximum of 5.

From the above examples it is therefore evident that the hot melt adhesive compositions C1 and C2 of the present invention, comprising glass particles and at least one hot melt adhesive, showed a transparent final appearance and with limited mass, so as to reduce the annoying and unsightly visibility of the glue line typically evident after bonding obtained by using traditional adhesives compositions. Conversely, the hot melt adhesive comparison composition C3, free of glass particles, led to a panel swelling, with a consequent not satisfactory aesthetic appearance.

The hot melt adhesive compositions C1 and C2 of the present invention also showed excellent water resistance, and high thermal resistance in terms of temperature at which the material softens. Furthermore, the hot-melt adhesive compositions C1 and C2 are energetically affordable, non-toxic, and allow easy cleaning of the machinery.

## Claims

1. Hot melt adhesive composition for panel bordering comprising glass particles and at least one hot-melt adhesive, wherein said composition comprises a first hot melt adhesive selected from the G1 group, comprising ethylene-vinyl acetate (EVA) copolymers having a vinyl acetate content from 20 to 35% and a melt index between 4.0 and 15.0 g/10 minutes, and a second hot melt adhesive selected from the G2 group comprising ethylene-vinyl acetate (EVA) copolymers having a vinyl acetate content from 20 to 35 % and a melt index greater than 15.0 g/10 minutes, wherein the melt index is determined as described herein.

2. Composition according to claim 1, wherein said glass particles have a melting point in the range between about 1,100 °C and 1,300 °C and/or a bulk density between about 50 kg/m³ and about 200 kg/m³.

3. Composition according to any one of the preceding claims, wherein said glass particles have a spherical hollow shape and a diameter between 100 microns and 200 microns.

4. Composition according to any one of the preceding claims, comprising a first hot melt adhesive selected from said G1 group and having a vinyl acetate content from 25 to 30% and a melt index between 4.0 and 15.0 g/10 minutes, and a second hot melt adhesive selected from said G2 group and having a vinyl acetate content from 25 to 30% and a melt index greater than 15,0 g/10 minutes.

5. Composition according to any one of the preceding claims, comprising a first hot melt adhesive selected from the G1 group, comprising ethylene-vinyl acetate (EVA) copolymers having a vinyl acetate content from 20 to 35% and a melt index between 4.0 and 15.0 g/10 minutes, a second hot melt adhesive selected from the G2 group comprising ethylene-vinyl acetate (EVA) copolymers having a vinyl acetate content from 20 to 35% and a melt index between 15.0 and 35.0 g/10 minutes, and a third hot-melt adhesive selected from the G3 group comprising ethylene-vinyl acetate (EVA) copolymers having a vinyl acetate content from 20 to 35% and a melt index greater than 35.0 g/10 minutes.

6. Composition according to claim 5, comprising said first hot-melt adhesive selected from the G1 group in weight percentage from 3% to 15% compared to the total weight of the composition, said second hot-melt adhesive selected from the G2 group in weight percentage from 30% to 70% compared to the total weight of the composition and said third hot-melt adhesive selected from the G3 group in weight percentage from 0% to 30% compared to the total weight of the composition.

7. Composition according to any one of the preceding claims, wherein said composition further comprises a hydrocarbon type resin having a softening point between about 70 °C and about 135 °C, as calculated according to the method described in ASTM E 28-58T standard.

8. Composition according to any one of the preceding claims, wherein said composition further comprises a synthetic wax formed from saturated hydrocarbons.

## Patentansprüche

1. Schmelzhaftkleberzusammensetzung für Plattenumrandung, umfassend Glaspartikel und mindestens einen Schmelzhaftkleber, wobei die Zusammensetzung einen ersten Schmelzhaftkleber umfasst, ausgewählt aus der G1-Gruppe umfassend Ethylen-Vinylacetat (EVA) Copolymere mit einem Vinylacetatgehalt von 20 bis 35 % und einem Schmelzindex zwischen 4,0 und 15,0 g/10 Minuten, und einen zweiten Schmelzhaftkleber, ausgewählt aus der G2-Gruppe umfassend Ethylen-Vinylacetat (EVA) Copolymere mit einem Vinylacetatgehalt von 20 bis 35 % und einem Schmelzindex größer als 15,0 g/10 Minuten, wobei der Schmelzindex wie hierin beschrieben bestimmt wird.

2. Zusammensetzung gemäß Anspruch 1, wobei die Glaspartikel einen Schmelzpunkt im Bereich zwischen ungefähr 1.100° C und 1.300° C aufweisen, und/oder eine Schüttdichte zwischen ungefähr 50 kg/m³ und ungefähr 200 kg/m³.

3. Zusammensetzung gemäß irgendeinem der vorhergehenden Ansprüche, wobei die Glaspartikel eine Hohlkugelform aufweisen und einen Durchmesser zwischen 100 Mikrometer und 200 Mikrometer.

4. Zusammensetzung gemäß irgendeinem der vorhergehenden Ansprüche, umfassend einen ersten Schmelzhaftkleber ausgewählt aus der G1-Gruppe und mit einem Vinylacetatgehalt von 25 bis 30 % und einem Schmelzindex zwischen 4,0 und 15,0 g/10 Minuten, und einen zweiten Schmelzhaftkleber ausgewählt aus der G2-Gruppe und mit einem Vinylacetatgehalt von 25 bis 30 % und einem Schmelzindex größer als 15.0 g/10 Minuten.

5. Zusammensetzung gemäß irgendeinem der vorhergehenden Ansprüche, umfassend einen ersten Schmelzhaftkleber ausgewählt aus der G1-Gruppe umfassend Ethylen-Vinylacetat (EVA) Copolymere mit einem Vinylacetatgehalt von 20 bis 35 % und einem Schmelzindex zwischen 4,0 und 15,0 g/10 Minuten, einen zweiten Schmelzhaftkleber ausgewählt aus der G2-Gruppe umfassend Ethylen-Vinylacetat (EVA) Copolymere mit einem Vinylacetatgehalt von 20 bis 35 % und einem Schmelzindex zwischen 15,0 und 35,0 g/10 Minuten, und einen dritten Schmelzhaftkleber ausgewählt aus der G3-Gruppe umfassend Ethylen-Vinylacetat (EVA) Copolymere mit einem Vinylacetatgehalt von 20 bis 35 % und einem Schmelzindex größer als 35,9 g/10 Minuten.

6. Zusammensetzung gemäß Anspruch 5, umfassend diesen ersten Schmelzhaftkleber ausgewählt aus der G1-Gruppe mit einem Gewichtsanteil von 3 % bis 15 % im Vergleich zu dem Gesamtgewicht der Zusammensetzung, diesen zweiten Schmelzhaftkleber ausgewählt aus der G2-Gruppe mit einem Gewichtsanteil von 30 % bis 70 % im Vergleich zu dem Gesamtgewicht der Zusammensetzung, und diesen dritten Schmelzhaftkleber ausgewählt aus der G3-Gruppe mit einem Gewichtsanteil von 0 % bis 30 % im Vergleich zu dem Gesamtgewicht der Zusammensetzung.

7. Zusammensetzung gemäß irgendeinem der vorhergehenden Ansprüche, wobei diese Zusammensetzung ferner ein Kohlenwasserstoff-artiges Harz mit einem Erweichungspunkt zwischen ungefähr 70° C und ungefähr 135° C umfasst, berechnet gemäß dem Verfahren beschrieben im ASTM E 28-58T Standard.

8. Zusammensetzung gemäß irgendeinem der vorhergehenden Ansprüche, wobei diese Zusammensetzung ferner ein synthetisches Wachs, gebildet aus gesättigten Kohlenwasserstoffen, umfasst.

## Revendications

1. Composition adhésive thermofusible pour une bordure de panneau comprenant des particules de verre et au moins un adhésif thermofusible, dans laquelle ladite composition comprend un premier adhésif thermofusible choisi dans le groupe G1 comprenant des copolymères d'éthylène - acétate de vinyle (EVA) ayant une teneur en acétate de vinyle de 20 à 35 % et un indice de fusion entre 4,0 et 15,0 g/10 minutes, et un deuxième adhésif thermofusible choisi dans le groupe G2 comprenant des copolymères d'éthylène - acétate de vinyle (EVA) ayant une teneur en acétate de vinyle de 20 à 35 % et un indice de fusion supérieur à 15,0 g/10 minutes, dans laquelle l'indice de fusion est déterminé comme on le décrit ici.

2. Composition selon la revendication 1, dans laquelle lesdites particules de verre ont un point de fusion dans la plage entre environ 1 100 °C et 1 300 °C et/ou une densité apparente entre environ 50 kg/m³ et environ 200 kg/m³.

3. Composition selon l'une quelconque des revendications précédentes, dans laquelle lesdites particules de verre ont une forme creuse sphérique et un diamètre entre 100 microns et 200 microns.

4. Composition selon l'une quelconque des revendications précédentes, comprenant un premier adhésif thermofusible choisi dans ledit groupe G1 et ayant une teneur en acétate de vinyle de 25 à 30 % et un indice de fusion entre 4,0 et 15,0 g/10 minutes, et un deuxième adhésif thermofusible choisi dans ledit groupe G2 et ayant une teneur en acétate de vinyle de 25 à 30 % et un indice de fusion supérieur à 15,0 g/10 minutes.

5. Composition selon l'une quelconque des revendications précédentes, comprenant un premier adhésif thermofusible choisi dans le groupe G1, comprenant des copolymères d'éthylène - acétate de vinyle (EVA) ayant une teneur en acétate de vinyle de 20 à 35 % et un indice de fusion entre 4,0 et 15,0 g/10 minutes, un deuxième adhésif thermofusible choisi dans le groupe G2 comprenant des copolymères d'éthylène - acétate de vinyle (EVA) ayant une teneur en acétate de vinyle de 20 à 35 % et un indice de fusion entre 15,0 et 35,0 g/10 minutes, et un troisième adhésif thermofusible choisi dans le groupe G3 comprenant des copolymères d'éthylène - acétate de vinyle (EVA) ayant une teneur en acétate de vinyle de 20 à 35 % et un indice de fusion supérieur à 35,0 g/10 minutes.

6. Composition selon la revendication 5, comprenant ledit premier adhésif thermofusible choisi dans le groupe G1 en pourcentage en poids de 3 % à 15 % par rapport au poids total de la composition, ledit deuxième adhésif thermofusible choisi dans le groupe G2 en pourcentage en poids de 30 % à 70 % par rapport au poids total de la composition et ledit troisième adhésif thermofusible choisi dans le groupe G3 en pourcentage en poids de 0 % à 30 % par rapport au poids total de la composition.

7. Composition selon l'une quelconque des revendications précédentes, dans laquelle ladite composition comprend en outre une résine de type hydrocarbure ayant un point d'assouplissement entre environ 70 °C et environ 135 °C, calculé selon le procédé décrit dans la norme ASTM E 28-58T.

8. Composition selon l'une quelconque des revendications précédentes, dans laquelle ladite composition comprend en outre une cire synthétique formée d'hydrocarbures saturés.
